# EUROPÄISCHE PATENTSCHRIFT

(11) **EP 1 144 248 B1**
(45) Veröffentlichungstag und Bekanntmachung des Hinweises auf die Patenterteilung: **28.08.2002**
(21) Anmeldenummer: 99962104.8
(22) Anmeldetag: 01.12.1999
(51) Int. Cl.: B64C 1/00

(54) **VERSTELLBARES BLATTPROFIL VOM ROTORBLATT EINES DREHFLÜGLERS**
ADJUSTABLE BLADE PROFILE OF THE ROTOR BLADE OF A ROTARY WING AIRCRAFT
PROFIL AJUSTABLE DE PALE DE ROTOR DE GIRAVION

(30) Priorität: 21.12.1998 DE 19859041
(43) Veröffentlichungstag der Anmeldung: 17.10.2001
(73) Patentinhaber: EADS Deutschland GmbH, 81663 München (DE)
(72) Erfinder: MÜLLER, Günther, D-83558 Maitenbeth (DE)
(74) Vertreter: Baum, Wolfgang, Dipl.-Ing.
(86) Internationale Anmeldenummer: DE9903789
(87) Internationale Veröffentlichungsnummer: WO00037309

(56) Entgegenhaltungen:
- FR-A- 1 392 727
- US-A- 2 369 049
- US-A- 2 950 768
- US-A- 4 235 397
- US-A- 4 514 143
- US-A- 5 224 826

## Beschreibung

Die Erfindung betrifft ein Rotorblatt eines Drehflüglers, gebildet aus einem Blattgrundkörper und den beiden Profilkanten gebildet ist, wobei mindestens eine Profilkante um eine längs zur Blattlängsachse geführten Achsrichtung verstellbar ist, und zwischen Profilkante und Blattgrundkörper mindestens ein Federmittel angeordnet ist.

Die US-PS 4.514.143 beschreibt einen Torsionsstab, der eine Klappe mit einem Blatt verbindet. Der Torsionsstab bildet die Lagerung und Drehachse für die Klappe. Der Torsionsstab wirkt dort als Federmittel.
Nicht die Auftriebskraft verstellt oder beeinflußt die Klappe, sondern die Biegekraft (Torsionskraft) des Torsionsstabes. Der Torsionsstab beeinflußt und verstellt die Klappe. Die Lösung benötigt zur Verstellung der Klappe den Umweg über einen Torsionsstab.

Das rotierende Rotorblatt des Mehrblattrotors eines Hubschraubers wird beim Flug in seinem Einstellwinkel β sowohl für den Vorlauf als auch für den Rücklauf mittels einer Taumelscheibe verstellt, um einen Auftriebsausgleich zwischen Vor- und Rücklauf am Rotorblatt zu erzeugen. Die dabei während des Fluges am Blatt entstehenden Vibrationen sind nachteilig, da sie sich bis auf den Hubschrauberrumpf störend auswirken. Diese Vibrationen werden verstärkt, da die Taumelscheibe plötzlich auftretende Luftwirbel am - Rotorblatt nicht durch zusätzliche Verstellreaktion am Rotorblatt auszugleichen vermag.

Die US PS 5.224.826 beschreibt, insbesondere zu dortiger Figur 1, ein Rotorblatt für einen Hubschrauber. Das dortige Blattprofil wird von einem Blattgrundkörper gebildet, der mit einer Profilvorderkante und einer Profilhinterkante verbunden ist. Die Profilhinterkante ist verstellbar ausgebildet, wobei die verstellbare Profilhinterkante an der Blattoberseite in einem Nahtbereich zum Blattgrundkörper längs einer zur Blattlängsachse geführten Achsrichtung schwenkbar ist und an der Blattunterseite gegenüber dem Blattgrundkörper frei beweglich ist. Der Nahtbereich wird von einem biegeweichen Material gebildet. Die verstellbare Profilhinterkante entspricht einer beweglichen Klappe. Innerhalb des Rotorblattes ist ein Steuermittel angeordnet, welches einseitig mit einem Sparren des Grundkörpers vom Rotorblatt fest verbunden ist. Das gegenüberliegende Ende des Steuermittels ist über eine Aufhängung im Blattinneren mit dem Nahtbereich der Blattoberseite verbunden. Das Steuermittel ist als Platte ausgebildet, welche vorzugsweise mit einem piezoelektrischen Material beschichtet ist. Die Steuerung der beiden piezoelektrischen Schichten erfolgt mittels einer externen Steuerung, die über Leitungen mit den beiden Schichten verbunden ist. Entsprechende elektrische Felder erzeugen in den piezoelektrischen Schichten eine Biegung, die zwangsweise auf die Platte übertragen wird, so daß über die Aufhängung des Steuermittels im Nahtbereich die Profilhinterkante (Klappe) verstellbar ist.

Mit der bekannten Lösung sollen die während des Fluges vom Rotorblatt erzeugten Vibrationen, die sich störend am Hubschrauberrumpf bemerkbar machen, reduziert werden. Allerdings fehlt der Lösung auch ein Meßorgan, welches die Steuerung auf die aktuell am Rotorblatt wirkende Aerodynamik einstellt (z. B. bei plötzlichen Luftwirbeln). Für unterschiedliche Flugbedingungen des Hubschraubers müssen entsprechend in Echtzeit arbeitende Steuerprogramme zur Verfügung stehen, um die Profilhinterkante exakt zu verstellen. Das erfordert hohen technologischen Folgeaufwand. Nachteilig ist weiterhin, daß vom rotierenden Rotor elektrische Leitungen zu einer Steuerung geführt werden müssen. Der Lösung gelingt es nur mit großem Aufwand, die Aerodynamik des Rotorblattes den aktuellen Flugbedingungen annähernd anzupassen.

Aufgabe der Erfindung ist es, das aerodynamische Profil eines Rotorblattes vom Hubschrauber derart verstellbar zu machen, daß dessen Aerodynamik den Flugbedingungen und dem Auftriebsausgleich zwischen Blattvor- und Blattrücklauf besser anpaßbar ist und gleichzeitig einen geringeren Aufwand erfordert.

Die Aufgabe wird gelöst nach den kennzeichnenden Merkmalen des Anspruch 1.

Zwischen verstellbarer Profilkante (entspricht einer Klappe) und Blattgrundkörper ist mindestens ein Federmittel angeordnet. Bei einer Rotation des Blattes kann das Federmittel seine Federeigenschaft ändern in Abhängigkeit einer an der verstellbaren Profilkante wirkenden Auftriebskraftänderung (± Δ F_{A}) und einer am Federmittel wirkenden Zentrifugalkraft (F_{ZF}). Die änderbaren Federeigenschaften sind Federweg und/oder Federsteifigkeit. Dieses Federmittel ermöglicht eine selbständige Verstellung der verstellbaren Profilkante. In einem solchen Fall müßte das verwendete Material und dessen Dimensionierung für eine verstellbare Profilkante sowie des Blattgrundkörpers ausreichende, eigene Dämpfungseigenschaften aufweisen. Faserverbundwerkstoffe sind hierzu geeignet.

Der Vorteil der Lösung besteht in einer selbsteinstellenden Profiländerung eines rotierenden Blattes. Die selbsteinstellende Profiländerung ist möglich insbesondere in Abhängigkeit der Auftriebskraftänderung (± Δ F_{A}) aus Vorlauf und Rücklauf des Rotorblattes, so daß ein im wesentlichen konstanter Auftrieb für einen Rotorblattumlauf während des Fluges erzielbar ist. Die Folge ist eine deutliche Reduzierung des vom Rotorblatt erzeugten Vibrationspegels.

Bei entsprechend hochfrequenter Dimensionierung des Federmittels wäre es möglich, mittels der selbsteinstellenden Profiländerung auf die bisherige Taumelscheibe mit Steuerstangen zu verzichten.

In einer weiteren Ausgestaltung können mehrere Federmittel radial hintereinander in Richtung Blattspitze positioniert sein. Aufgrund der unterschiedlichen Orte in der verstellbaren Profilkante sollten die Federmittel entsprechend ihrer lokalen Position unterschiedlich dimensioniert sein. Mit dieser Ausgestaltung lassen sich die Verstelleigenschaften der Profilkante verbessern.

Entsprechend einer weiteren Ausgestaltung ist das Federmittel mit einem Dämpfungselement angeordnet.

Vorteilhafterweise ist das Federmittel mit einem Dämpfungselement und einem Steuerelement ausgerüstet. Das entspricht einer optimalen Ausgestaltung des Feder-Masse-Dämpfungs-Systems. Mittels Steuerelement ist quasi statisch eine Justierung dieses Systems möglich. Die Federeigenschaften sind beeinflußbar.

Eine Blattfeder als Federmittel einzusetzen ist eine einfache und kostengünstige Möglichkeit. Die Blattfeder ist mit ihrer konkaven Wölbung in radialer Richtung zur Blattspitze zwischen verstellbarer Profilkante und Blattgrundkörper anzuordnen. Die Enden der Blattfeder sind bezüglich der Wölbung in Richtung Blattwurzel positioniert und stützen sich ab einerseits an einem Ausschlag der verstellbaren Profilkante und andererseits an dem Blattgrundkörper.

Ein Ende der Blattfeder (das Ende in Richtung Blattgrundkörper) kann vorteilhafterweise mit einem Steuerelement verbunden sein. Damit ist die Eigenfrequenz des Feder-Masse-Dämpfungs-Systems beeinflußbar. Das Steuerelement kann ein mechanisches Gestänge sein, welches in Blattlängsrichtung das einzelne Blattfederende verschiebt und fixiert. Eine analoge Funktion kann ein piezoelektrisch gesteuerter Aktuator übernehmen, der mit der Blattfeder verbunden ist.

Entsprechend einer weiteren Ausgestaltung kann das Federmittel auch bei Luftwirbeln am Blatt reagieren, wenn die Federkennlinie der Anregungsfunktion angepaßt ist.

Die verstellbare Klappe mit Federmittel und Dämpfungselement bildet ein Feder-Dämpfungs-Masse-System. Wenn ein solches Feder-Dämpfungs-Masse-System höherfrequent gegenüber der Anregung durch die Rotorfrequenz eingestellt ist, gelingt es mittels verstellbarem Blattprofil sofort, auf lokale Strömungsänderungen wie Luftwirbel zu reagieren. Der Vorteil ist ein Wirbelausgleich am Blatt.

Weiterhin besteht die Möglichkeit mit dem sich selbständig verstellenden Blattprofil, die Strömung am rotierenden Rotorblatt zu verbessern. Insbesondere bei Maximaldrehzahl des Rotors kann ein Strömungsabriß am Rotorblatt verzögert werden, was in einer Erhöhung des Gesamtauftriebs resultiert.

Ausführungsbeispiele der Erfindung sind nachfolgend näher beschrieben und in Zeichnungen dargestellt. Es zeigen
- **Fig. 1**: nicht vollständige Darstellung eines Rotorblattes vom Hubschrauber
- **Fig. 2**: verstellbare Profilkante mit Federmittel und Dämpfungselement
- **Fig. 2a**: schematische Darstellung von Fig. 2 bei zusätzlicher Darstellung eines Steuerelements
- **Fig. 3**: grafische Funktionen zur Arbeitsweise der selbsteinstellenden Profiländerung
- **Fig. 4**: mechanisches Steuerelement
- **Fig. 5**: piezoelektrischer Aktuator zwischen Blattfeder und Blattgrundkörper
- **Fig. 6**: Blattfeder mit piezoelektrischer Schicht
- **Fig. 7**: Verbindung mehrerer Blattfedern mit einem Stab
- **Fig. 8**: teilweise Explosivdarstellung der Lager- und Haltemittel für eine verstellbare Profilkante im Bereich der Blattspitze
- **Fig. 8a**: Schnitt D-D zu Fig. 8
- **Fig. 8b**: Schnitt E-E zu Fig. 8
- **Fig. 9**: kombinierte Steuerstange

Ein Mehrblattrotor der gegenwärtigen Generation hat beispielsweise 4 einzelne Rotorblätter. Bei einer Rotation des einzelnen Blattes wird an der Blattspitze eine Umfangsgeschwindigkeit v von beispielsweise 800 km/h erreicht. Begibt sich der Hubschrauber in eine Flugrichtung wird das Rotorblatt zusätzlich der Vorwärtsgeschwindigkeit u des Hubschraubers ausgesetzt. Diese Vorwärtsgeschwindigkeit u kann beispielsweise 150 km/h betragen. Bei einem Vorlauf des Rotorblattes addiert sich die Vorwärtsgeschwindigkeit u zu der Umfangsgeschwindigkeit v und erreicht die Strömungsgeschwindigkeit v + u von 950 km/h.
Im Rücklauf liegen die Verhältnisse anders. Die Umfangsgeschwindigkeit v wird um die Vorwärtsgeschwindigkeit u reduziert, so daß eine Strömungsgeschwindigkeit v - u von 650 km/h existiert. Aufgrund dieser unterschiedlichen Strömungsgeschwindigkeiten während eines Umlaufs von 360° entsteht eine Differenz der Auftriebskraft am Rotorblatt. Um diese Differenz der Auftriebsänderung (± Δ F_{A}) zwischen Vorlauf und Rücklauf auszugleichen, muß der Einstellwinkel β des Rotorblattes für den Blattvorlauf als auch für den Blattrücklauf verstellt werden. Dabei ist der Einstellwinkel β der Winkel zwischen der Profilsehne und der Rotordrehebene. Diese Verstellung erfolgt durch die Taumelscheibe. Die Taumelscheibe reduziert den Einstellwinkel β des Rotorblattes im Vorlauf und erhöht ihn im Rücklauf. Dabei wird das Rotorblatt von der Taumelscheibe mittels Steuerstange während der Rotation durch Drehung in seiner Blattlängsachse verstellt.

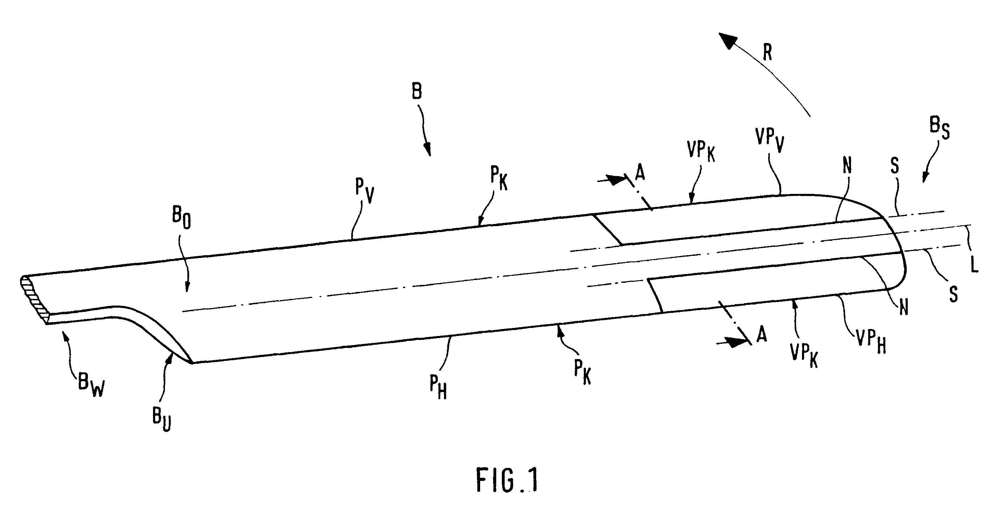

**Fig. 1** zeigt ein nicht vollständiges Rotorblatt B eines Hubschraubers, welches an einem nicht dargestellten, drehbaren Rotorkopf befestigt ist. Das Rotorblatt B wird mittels eines an der Blattwurzel B_{w} (hier nicht vollständig dargestellt) anzuordnendem Befestigungsmittel am Rotorkopf oder an einem Blattanschlußarm einer Rotorkopfplatte befestigt. Die Blattlänge ergibt sich von der Blattwurzel B_{w} bis zur Blattspitze Bₛ. Das Rotorblatt B besitzt Profilkanten P_{K}. Als Profilkanten P_{K} sind die Profilvorderkante P_{V} und die Profilhinterkante P_{H} gezeigt. Ein Abschnitt der Profilvorderkante P_{V} und/oder ein Abschnitt der Profilhinterkante P_{H} kann verstellbar sein und kann deshalb auch als verstellbare Profilvorderkante VP_{V} bzw. verstellbare Profilhinterkante VP_{H} bezeichnet sein. Da Aussagen zur Verstellbarkeit sowohl für die verstellbare Profilvorderkante VP_{V} als auch die verstellbare Profilhinterkante VP_{H} zutreffend sind, werden beide nachfolgend durch den Begriff der verstellbaren Profilkante VP_{K} gekennzeichnet. Eine verstellbare Profilkante VP_{K} entspricht einer verstellbaren Klappe am Rotorblatt.

Zwischen Blattoberseite Bₒ und Blattunterseite Bᵤ ist die fiktive Blattlängsachse L ausgerichtet. Das Rotorblatt B rotiert entsprechend dem Pfeil in Rotationsrichtung R.

Das Rotorblatt B könnte von der Blattwurzel B_{W} bis zur Blattspitze B_{S} mit einer verstellbaren Profilvorderkante VP_{V} und/oder einer verstellbaren Profilhinterkante VP_{H} ausgerüstet sein. Eine solche Variante ist abhängig von den zu absolvierenden Flugbedingungen des Hubschraubers. Da im Bereich der Blattspitze Bsdie höchsten Auftriebskräfte erzeugt werden, ist es andererseits sinnvoll, eine verstellbare Profilkante VP_{K} im Bereich der Blattspitze Bsvorzusehen. Dort ist die verstellbare Profilkante VP_{K} an der Blattoberseite B_{O} um eine Achse S schwenkbar. Dabei kann es sich um ein mechanisches Gelenk oder um einen biegeweichen Nahtbereich N handeln, der ein fiktives Gelenk bildet. Das Gelenk bildet eine (fiktive) Achse S, die parallel zur Blattlängsachse L orientiert ist.

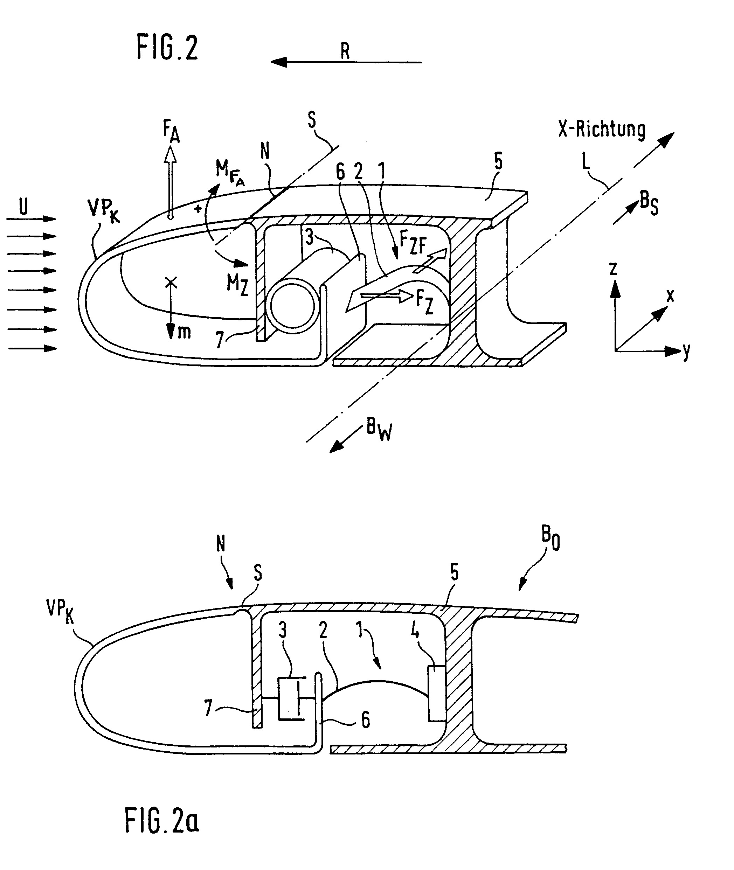

Anhand von **Fig. 2** sind ausschnittsweise Details für ein verstellbares Blattprofil erkennbar, wobei der Blick von der Blattwurzel B_{W} zur Blattspitze B_{S} gerichtet ist (entspricht der X-Richtung). Wie das Detail zeigt, wird das Blattprofil gebildet aus einem Blattgrundkörper 5 (teilweise dargestellt) und einer verstellbaren Profilkante VP_{K}. Die verstellbare Profilkante VP_{K} ist an der Blattobererseite B_{O} in einem biegeweichen Nahtbereich N gegenüber dem Blattgrundkörper 5 (um eine Achse S, die parallel zur Blattlängsachse L geführt ist) schwenkbar und ist an der Blattunterseite B_{U} gegenüber dem Blattgrundkörper 5 frei beweglich. Der Nahtbereich N kann beispielsweise aus einem biegeweichen Faserverbundwerkstoff, insbesondere einem glasfaserverstärktem Kunststoff, gefertigt sein.

In Verbindung zwischen Blattgrundkörper 5 und der verstellbaren Profilkante VP_{K} ist mindestens ein Federmittel 1 angeordnet. Bei einer Rotation des Blattes B ändert das Federmittel 1 seine Federeigenschaft in Abhängigkeit einer an der verstellbaren Profilkante VP_{K} wirkenden Auftriebskraftänderung ± Δ F_{A} und der am Federmittel 1 wirkenden Zentrifugalkraft F_{ZF}. Als Federeigenschaft sind der Federweg x und/oder die Federsteifigkeit C_{H} änderbar. Der Federweg x ergibt sich aus der Wegstrecke zwischen beweglichem Federende und fixiertem Federende, vorzugsweise einer Blattfeder, infolge der Bewegung des beweglichen Federendes mit der Profilkante VP_{K}.

Beispielsweise bei einer Auftriebskraftänderung F_{A} ± Δ F_{A} wird die Profilkante VP_{K} derart selbständig verstellt, daß das an der Profilkante VP_{K} wirkende Auftriebsmoment M_{A} stets gleich dem an der Profilkante VP_{K}angreifenden, gegensätzlichen Zugmoment M_{z} ist.

Das Federmittel 1 ist mit seinen Enden mit der verstellbaren Profilkante VP_{K}und dem Blattgrundkörper 5 verbunden ist. In einem solchen Fall müßte das verwendete Material und die Dimensionierung der verstellbaren Profilkante VP_{K}und des Blattgrundkörpers 5 ausreichende, eigene Dämpfungseigenschaften aufweisen.

Vorteilhafterweise wird ein Dämpfungselement 3 angeordnet, um die Bewegung der Masse m der verstellbaren Profilkante VP_{K} definiert zu dämpfen. Beispielsweise ist das Dämpfungselement 3 zwischen Rippe 7 des Blattgrundkörpers 5 und dem Anschlag 6 der verstellbaren Profilkante VP_{K} angeordnet. Das Dämpfungselement 3 kann ein gummielastisches, rohrförmiges Element sein. Ein anderes geeignetes Dämpfungselement könnte beispielsweise auf dem Federmittel 1 selbst angeordnet sein. Geeignet sind Dämpfungselemente, die im Rotorblatt einsetzbar sind und die Bewegung der Profilkante dämpfen können. Es können hierbei passive Dämpfungsbeläge wie auch aktive Dämpfungssysteme (z.B. Piezoelemente) zum Einsatz kommen.

Das Federmittel 1 ist vorteilhafterweise als Blattfeder 2 ausgebildet. Bei einer Blattfeder 2 ist die konvexe Wölbung in Richtung Blattspitze B_{S} (entspricht der X-Richtung) ausgerichtet, so daß die Blattfeder 2 bei rotierendem Blatt durch die Zentrifugalkraft F_{ZF} in einer definiert gespannten Position gehalten wird. Durch die wirkende Zentrifugalkraft F_{ZF} erzeugt die Blattfeder 2 an ihren Enden eine Kraft F_{Z} (dargestellt an der verstellbaren Profilkante).

In einer vorteilhaften Ausgestaltung (**Fig. 2a**) kann vorgesehen werden, daß ein Steuerelement 4 zwischen einem Ende des Federmittels 1 und dem Blattgrundkörper 5 angeordnet ist.

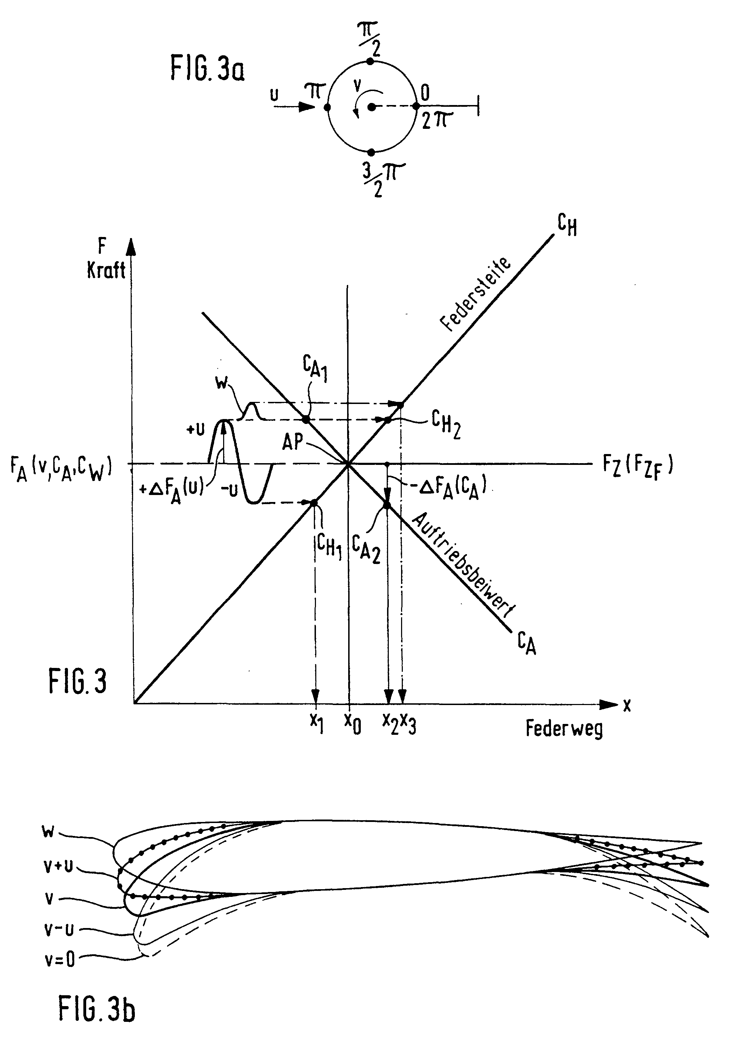

**Fig. 3** liefert anhand grafischer Funktionen Erläuterungen zum Funktionsprinzip des Federmittels 1. Dargestellt ist die Federkennlinie, d.h. die Federsteife C_{H} eines Federmittels 1 und des Auftriebsbeiwerts C_{A} vom Rotorblattprofil. Die Koordinaten werden gebildet von der Kraft F und dem Federweg x. Als Federmittel kann beispielsweise eine Blattfeder eingesetzt sein. Es sind aber auch andere Formen einer Feder möglich, die auf Auftriebskraftänderungen und auf die Zentrifugalkraft reagieren.

Es sind zwei grundsätzliche Betriebszustände für den Betrieb des Rotorblattprofils zu beachten.

**Betriebszustand I** wird repräsentiert durch einen am Boden stehenden Hubschrauber mit rotierenden Rotorblättern konstanter Umfangsgeschwindigkeit v. Einen analogen Zustand bildet der Schwebeflug des Hubschraubers. Der Wind ist vernachlässigbar. Eine Vorwärtsgeschwindigkeit u des Hubschraubers existiert nicht. Infolge einer konstanten Umlaufgeschwindigkeit v stellt sich eine Auftriebskraft F_{A} ein. Diese Auftriebskraft F_{A} ist pro Blattumlauf konstant. Infolge der konstanten Umfangsgeschwindigkeit v wird an der Blattfeder 2 eine konstante Zentrifugalkraft F_{ZF} wirken, die die konvexe Wölbung der Blattfeder in Richtung der Blattspitze B_{S} (entspricht der X-Richtung) zieht. Dabei wird die Blattfeder 2 an ihren Enden eine Kraft F_{Z} erzeugen, die konstant ist. Der dabei erreichte Federweg x_{O} (Weg zwischen den beiden Enden der Blattfeder 2) bleibt konstant.

Der Wert des Federweges x₀ schneidet die Federkennlinie im Arbeitspunkt AP. Die Lage des Arbeitspunktes AP muß entsprechend der Funktion des selbsteinstellenden Profils (CA) eingestellt werden.

Beide Kräfte, Auftriebskraft F_{A} sowie Kraft F_{Z}, erzeugen mit Einstellung des Arbeitspunktes AP an der verstellbaren Profilkante VP_{K} (d.h. der Klappe) jeweils ein Moment, welche in ihrer Wirkungsrichtung gegensätzlich sind, so daß sich ein Blattprofil mit konstantem Auftriebsbeiwert C_{A} einstellt, d.h. die verstellbare Profilkante VP_{K} schwenkt um die Achse S in eine konstante Verstellposition des Profils. **Fig. 3b** zeigt in Übersicht aus einer Vielzahl von Verstellpositionen der Profilkante VP_{K} die zutreffende Verstellposition bei Stillstand (Position v = 0) des Blattes und bei Rotation des Blattes im Schwebezustand (Position v) des Hubschraubers bzw. des am Boden stehenden Hubschraubers.

Ein anderer **Betriebszustand II** leitet sich her unter Zuhilfenahme von **Fig. 3a.** Der Betriebszustand II ist zutreffend, wenn der Hubschrauber im Flug ist. Wie Fig. 3 a skizzenhaft zeigt, sind in der Draufsicht zu einer Rotorblattebene eines Hubschraubers vier Positionen 0 bzw. 2 π, π/2, π, 3/2 π zu einer Umdrehung eines Rotorblattes markiert. Die Positionen von 0 in Drehrichtung (Pfeil) bis π kennzeichnen den Vorlauf eines Blattes und Positionen π bis 2n kennzeichnen den Rücklauf des Blattes. Im Vorlauf addiert sich die Strömungsgeschwindigkeit am Rotorblatt aus Umfangsgeschwindigkeit v und Vorwärtsgeschwindigkeit u des Hubschraubers. Im Vorlauf wird die Auftriebskraft F_{A} von Position 0 bis π/2 um bis zu einem Wert + Δ F_{A} erhöht und ab Position π/2 bis π reduziert sich dieser Wert auf die ursprüngliche Auftriebskraft F_{A}. Im Rücklauf ergibt sich die Strömungsgeschwindigkeit aus einer Subtraktion der Vorwärtsgeschwindigkeit u vom Wert der Umfangsgeschwindigkeit v. Daraus ergibt sich für die Position 3/2 π eine Reduzierung der Auftriebskraft F_{A} um den Wert - Δ F_{A}. Dieser Verlauf der Auftriebsreduzierung entspricht (analog einer Auftriebserhöhung) im wesentlichen einem kosinus- bzw. sinusförmigen Verlauf (π, 3/2 π, 2 π).

Die zwischen Vorlauf und Rücklauf wechselnden Werte der Strömungsgeschwindigkeit sind Ursache für wechselnde Auftriebskräfte F_{A} ± Δ F_{A} am Rotorblatt.

Aus diesem Grund schwankt der Wert Δ F_{A} während jeder Umdrehung des Rotorblattes zu dem bei konstanter Umfangsgeschwindigkeit v vorhandenen Wert der Auftriebskraft F_{A}. Wenn also die Auftriebskraft F_{A} im **Blattvorlauf** um bis zu einem Wert + Δ F_{A}größer wird, wird der Arbeitspunkt AP verlassen und automatisch, d.h. selbsteinstellend, die Blattfeder 2 gestreckt, indem die Auftriebskraft F_{A} + Δ F_{A} die verstellbare Profilkante VP_{K} um die (fiktive) Achse S in Z-Richtung (s. Fig. 2) schwenkt. Dabei vergrößert sich der Federweg x der Blattfeder 2 vom Wert x₀ zum Wert x₂. Die Blattfeder wird gestreckt und speichert die dazu geleistete Streckungsarbeit. Es wird der zum Federweg x₂ gehörende Wert C_{H₂} der Federsteife C_{H} erreicht. Mit Streckung der Blattfeder wird gleichzeitig das Rotorblattprofil verändert. Das Blattprofil wird gestreckt. Die Profilwölbung wird flacher. Der Auftriebsbeiwert C_{A} des Blattprofils wird kleiner. Eine entsprechende Verstellposition v + u des Blattprofils im Vorlauf bei π/2 zeigt Fig. 3b. In dem Maße wie die Auftriebskraft F_{A} zusätzlich um den Wert + Δ F_{A} wächst, reduziert sich durch die Bewegung der Blattfeder 2 der Auftriebsbeiwert C_{A₂} des Profils. Federweg x und Auftriebsbeiwert C_{A} bleiben nicht konstant. Je größer der sich ändernde Federweg, desto größer die Abnahme des Auftriebsbeiwertes. Als Ergebnis wird das Profil flacher, der Auftrieb geringer. Die erhöhte Auftriebskraft F_{A} + Δ F_{A} wird infolge der Profilstreckung sogleich um den Wert - Δ F_{A} reduziert.

Es erfolgt ein Auftriebsausgleich durch eine selbsteinstellende Änderung bzw. Anpassung des Blattprofils. Diese Anpassung erfolgt durch selbstständige Verstellung der verstellbaren Profilkante VP_{K}. Ein Auftriebsmoment M_{F_{A}}(u), welches abhängig ist von der Vorwärtsgeschwindigkeit u, wirkt gemäß Fig. 2 entsprechend Pfeilrichtung in positiver Drehrichtung zur (fiktiven) Achse S. Entgegengesetzt dazu wirkt ein Zugmoment M_{Z}. Der Komponente der Auftriebskraft + Δ F_{A} ist eine äquivalente Kraft entgegengerichtet. Das entspricht dem Auftriebsausgleich.

Analoges gilt für den **Blattrücklauf** wie er den Rotationspositionen π, 3/2 π und 2 π nach Fig. 3a entspricht.

Infolge der geringeren Strömungsgeschwindigkeit v - u wird eine niedrigere Auftriebskraft F_{A} - Δ F_{A} am Rotorblatt erzielt. Die Auftriebskraft F_{A} - Δ F_{A} entspricht einem Minimum, wie es sich in der Position 3/2 π einstellt. Das Auftriebsmoment M_{FA} (u) an der verstellbaren Profilkante wird schwächer. Die Blattfeder 2 kann den Federweg von x₀ zu x₁ verkürzen zu C_{H₁}. Damit verbunden ist eine Verstellung des Blattprofils, d.h. die Profilwölbung wird durch Kontraktion der Blattfeder 2 stärker ausgeprägt, der Auftriebsbeiwert geht zu C_{A₁}, womit der Auftrieb erhöht wird. Die im Rücklauf reduzierte Auftriebskraft F_{A} - Δ F_{A} kann tatsächlich nicht wirksam werden, da sie entsprechend durch wachsende Profilwölbung mit einer wachsenden, gegenwirkenden Auftriebskraft ausgeglichen wird. Ein Auftriebsausgleich wird erreicht. Als Ergebnis wird im Rücklauf die Profilwölbung stärker. Das entspricht gemäß Fig. 3b einer Verstellposition v - u. Bei einem Umlauf 0 bis 2 π der verstellbaren Profilkante VP_{K} wechselt die Verstellposition von Position v + u nach Position v - u. Das wiederholt sich periodisch mit der Anzahl der Umdrehungen. Fig. 3b zeigt in Übersicht Verstellpositionen der Profilkante VP_{K} im Flugzustand bei Blattvorlauf (Position v + u) und bei Rücklauf (Position v - u).

Um eine Änderung des Blattprofils schnell ausführen zu können, muß das Federmittel 1 als ein Feder-Dämpfungs-Masse-System wesentlich hochfrequenter dimensioniert sein als die Anregung mit der Kreisfrequenz des Rotorblattes von z.B. 6 Hz. Beispielsweise bei einer Eigenfrequenz des Systems (Masse m = 15 g, c = 5000 N/m, δ = 0,04) von 90 Hz ergäbe sich z.B. ein Nachlaufwinkel ϕ von 0,3 °, der vollkommen ausreichend wäre.

Wenn also das Federmittel 1 ausreichend hochfrequent gegenüber der Anregung des Rotors ist, kann das Rotorblatt auch auf lokale Strömungsänderungen (Wirbel w) reagieren. Diese Verstellposition w des Profils (Fig. 3b) ergibt sich bei in Richtung der Vorwärtsgeschwindigkeit u gerichteter Wirbelkomponente, wobei z.B. eine zusätzliche Erhöhung der Auftriebskraft F_{A} + Δ F_{A} + F_{A_{W}} erfolgt. Das Federmittel 1 streckt sich zwangsweise auf einen Federweg von x₀ bis x₃ (Fig. 3). Das entspricht der erhöhten Streckung (Entwölbung) des Profils wie Position w (Fig. 3b) zeigt.

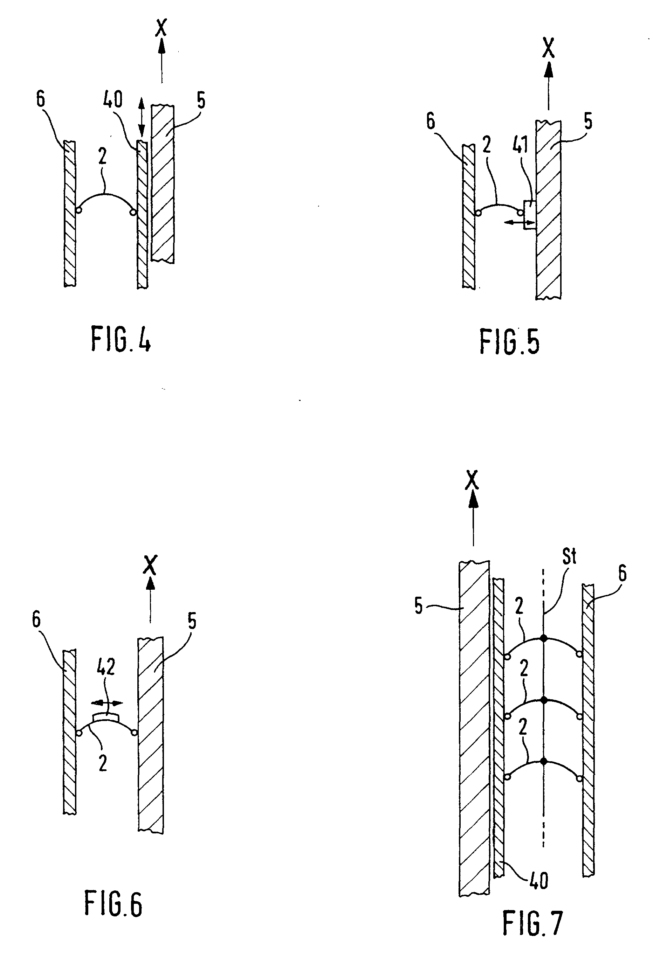

Um die Frequenz des Feder-Dämpfungs-Masse-Systems einstellbar machen zu können, ist das Federmittel 1 mit einem Steuerelement 4 ausgerüstet (s. Fig. 2a). Mit Hilfe einer mechanischen Steuerstange 40 (**Fig. 4**) kann die Lage des Federmittels 1 (der Blattfeder 2) in X-Richtung verändert und eingestellt werden. In diesem Fall wird die ursprünglich fixierte Position eines einzelnen Endes vom Federmittel in eine andere fixierte Position gebracht. Ein Ende des Federmittels wird von einer Ausgangslage in eine andere Endlage verschoben.

Nach Beispiel gemäß **Fig. 5** ist das Steuerelement 4 mit einem piezoelektrischen Aktuator 41 ausgerüstet. Dieser Aktuator 41 kann als Platte gestaltet sein, wobei dessen Grundfläche mit dem Blattgrundkörper 5 fest verbunden ist und dessen Deckfläche mit einem Ende der Blattfeder 2 fest verbunden ist. Jeder Aktuator 41 ist mittels Steuerleitung mit einer entsprechenden elektrischen Steuerung (nicht gezeigt) verbunden. Diese elektrische Steuerung wird von einem Rechner mittels Steuerprogramm gesteuert. Im Ergebnis der Steuerung ist eine Bewegung des Aktuator 41 in einer der Richtungen des Doppelpfeils möglich. Damit wird die Lage der Blattfeder 2 in X-Richtung verändert, d.h. die Steifigkeit der Blattfeder 2 (vgl. Fig. 2) ändert sich und damit das Frequenzverhalten.

Somit ändert sich auch die Zugkraft F_{Z}. Des weiteren kann hierdurch das Dämpfungsverhalten des Systems gesteuert werden.

Nach einer anderen Ausgestaltung gemäß **Fig. 6** könnte das Steuerelement als piezoelektrischer Aktuator auch einseitig (z.B. auf der konvex gewölbten Seite) auf der Blattfeder 2 aufgetragen sein. Vorzugsweise wäre hierbei ein Piezo-Faser-Laminat 42 zweckmäßig, welches auf der Blattfeder 2 aufgetragen ist. Es könnte damit ebenso die o.g. Effekte erzielt werden.

Die Blattfeder 2 könnte auch unter Verwendung einer Form-Gedächtnis-Legierung (shape memory alloy) oder eines elektrorestriktiven bzw. magnetorestriktiven Materials aufgebaut sind. In einem solchen Fall wäre ein piezoelektrischer Aktuator oder eine mechanische Steuerstange nicht notwendig. Die Blattfeder 2 selbst könnte sich in eine gewünschte Position steuern.

Eine Frequenzänderung ermöglicht quasi statisch die Justierung des Systems. Um diese Justierung zu automatisieren, kann bei mechanischen Steuerelementen eine Steuerung vorgesehen sein, die über ein Stellglied das Steuerelement 4 in die gewünschte Lage verstellt.

Es ergibt sich der Vorteil, daß das Steuermittel 1 auf effektive Weise justierbar ist und andererseits geeignet ist zum sofortigen Ausgleich einzelner, höher frequenter Störvorgänge (Luftwirbel), d.h. durch reaktionsschnelles Einleiten der eines Verstellvorgangs am Profil.

Vorteilhafterweise sind in radialer Richtung über die Länge einer verstellbaren Profilkante (längs zur Längsachse L) mehrere Federmittel 1 hintereinander angeordnet. Die Anordnung der einzelnen Federmittel ist so ausgeführt, daß diese sich bei Wegänderungen x bzw. Lageänderungen in X-Richtung gegenseitig nicht stören. Somit wird gewährleistet, daß eine Profiländerung kontinuierlich und effektiv über die Länge der Profilkante VP_{K} ausgeführt werden kann. Jedes Steuermittel 1 müßte dabei individuell dimensioniert werden. Um die Dimensionierung zu vereinfachen, können vorzugsweise alle Blattfedern 2 im Bereich ihrer konkaven Wölbung mechanisch verbunden werden, beispielsweise mittels eines Stabes St und geeigneter Verbindungsmittel. Eine solche kollektive Verbindung (**Fig. 7**) ermöglicht einen gleichen Wert der Kraft F_{Z} für die betreffenden Blattfedern 2.

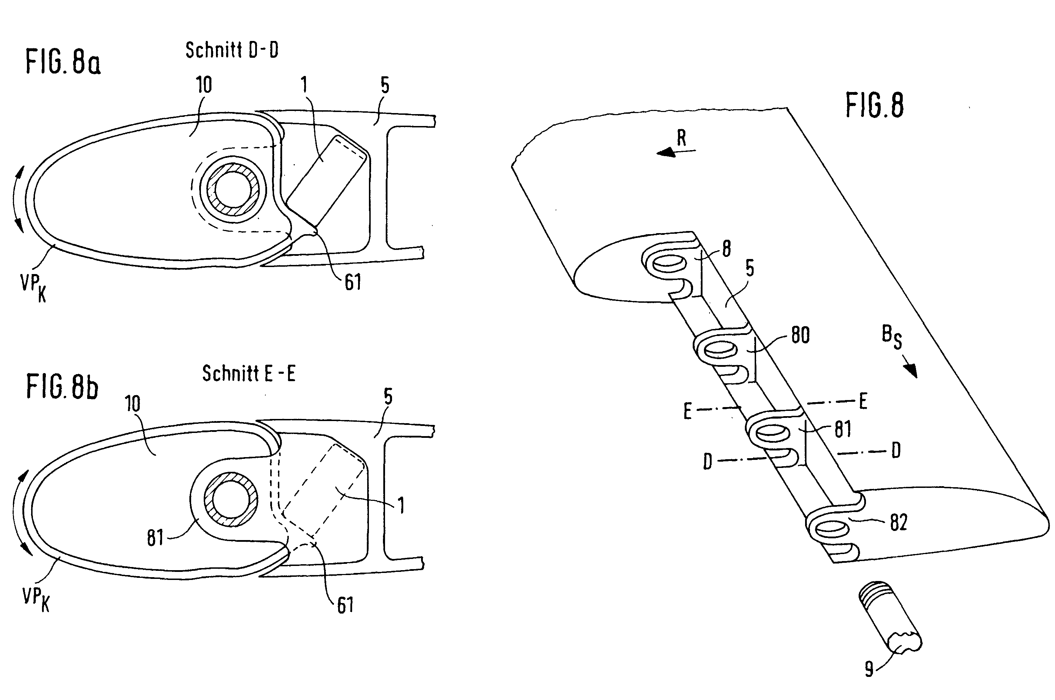

Die **Fig. 8, 8a, 8b** beschreiben ein anderes Ausführungsbeispiel der Erfindung. In Fig. 8 wird anhand einer teilweisen Explosivdarstellung der Bereich der Blattspitze B_{S} dargestellt, wobei die verstellbare Profilkante VP_{K} dort entfernt ist, so daß die Halterung und Lagerung für die verstellbare VP_{K} sichtbar ist. Der Pfeil zeigt die Rotationsrichtung R an. Es sind mehrere radial hintereinander angeordnete Lagerböcke 8, 80, 81, 82 gezeigt, die einen Rohrbolzen 9 aufnehmen. Die Fig. 8a, 8b zeigen die entsprechenden Schnitte bei eingebauter verstellbarer Profilkante VP_{K}.

Die Profilkante VP_{K} besitzt mehrere Rippen, wobei der dargestellte Schnitt die Rippe 10 zeigt, deren eine Bohrung jeweils in Flucht zu den Lagerböcken angeordnet ist. Das gilt auch für die anderen Rippen. Der Rohrbolzen 9 ist durch die einander gegenüberliegenden Bohrungen in den Rippen geführt. Er ist somit in den Lagerböcken 8, 80, 81, 82 gelagert und bildet eine Achse für die verstellbare Profilkante VP_{K}. Mit bekannten Mitteln ist diese Achse gegen axialen Verschub gesichert.

**Fig. 8b** läßt erkennen, daß die verstellbare Profilkante VP_{K} einen Anschlag 61 ausgebildet hat, wobei die Länge des Anschlages beispielsweise der Länge der verstellbaren Profilkante VP_{K} entspricht. Auf diesem Anschlag 61 sind in radialen Abständen zueinander Federmittel 1 befestigt, die andererseits mit dem Blattgrundkörper 5 verbunden sind. Das als Masse-Feder-Dämpfungs-System funktionierende Anordnung kann wie bereits erläutert den Hub des Anschlags 61 verstellen und somit das Profil wirksam ändern.

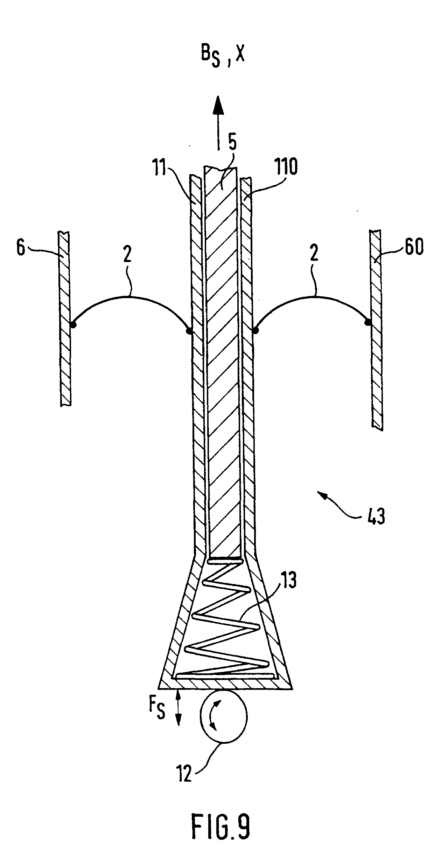

**Fig. 9** zeigt, daß das Steuerelement 4 auch als kombinierte Steuerstange ausgebildet sein kann. Mit Hilfe dieser kombinierten Steuerstange wird die Lage zweier Blattfedern 2 verstellt. Ein solcher Fall tritt auf, wenn das Blatt beispielsweise eine vordere, verstellbare Klappe und eine hintere, verstellbare Klappe hat. Der Anschlag 6 gehört zur vorderen Klappe, der Anschlag 60 gehört zur hinteren Klappe. Fig. 9 zeigt dazu in einer Ansicht von der Blattoberseite die zwei benachbarten Steuerstangen 11, 110. Die Steuerstangen 11, 110 führen gleichzeitig, d.h. synchron einen Hub (siehe Doppelpfeil) aus, wenn sie durch eine Steuerscheibe 12 dazu veranlaßt werden. Die Steuerscheibe 12 wird beispielsweise von einem elektromotorischen Antrieb mit Steuerung geführt. Zwischen den beiden Steuerstangen 11, 110 und dem Blattgrundkörper 5 ist eine Steuerfeder 13 angeordnet, die einen Hub der Steuerstangen 11, 110 in X-Richtung ermöglicht. Die Steuerfeder 13 bringt den Vorteil, daß die Steuerkraft F_{S} minimiert wird. Die Eigenfrequenz der Steuerfeder 13 kann die Fequenz der Anregung durch Wirbel oder unsymmetrische Luftturbulenzen erreichen. Damit kann die Blattfeder 2 in Echtzeit auf Wirbel bzw. unsymmetrische Luftturbulenzen reagieren und eine Profilanpassung ermöglichen. Die Kraft F_{S} zum Verstellen der kombinierten Steuerstange 11, 110 wird mittels der Steuerscheibe 12 aufgebracht.

Das im Rotorblatt installierte Federmittel 1 hat den Vorteil, daß es einer demontagelosen Kontrolle zugänglich ist. Das betrifft sowohl die Qualitätskontrolle am neu gefertigten Rotorblatt sowie die Inspektion am stehenden Rotorblatt nach einem Ereignis.

Eine Kontrollmöglichkeit bietet z.B. ein Sweep-Resonanztest für das Federmittel 1. Ein Schwingungsgeber erzeugt bekannte Erregerfequenzen am Rotorblatt und die entsprechenden Frequenzantworten werden meßtechnisch erfaßt und ausgewertet. Erbringt ein Sweep-Resonanztest nach längerer Betriebszeit in einer Toleranz liegende Frequenzantworten, ist die Qualität des Federmittels 1 unbeeinträchtigt. Werden Abweichungen (z.B. in Folge abnormen Verschleißes oder von Bruch) zu einer "normalen" Frequenzantwort ermittelt, besteht Wartungsbedarf. Ein Vorteil ist, daß beim Sweep-Resonanztest das Rotorblatt nicht vom Rotorkopf demontiert werden muß.

## Patentansprüche

1. Rotorblatt eines Drehflüglers, gebildet aus einem Blattgrundkörper und den beiden Proflkanten, wobei mindestens eine Profilkante um eine längs zur Blattlängsachse geführten Achsrichtung lagerbar und verstellbar ist, und zwischen verstellbarer Profilkante und Blattgrundkörper mindestens ein Federmittel angeordnet ist, **dadurch gekennzeichnet, daß** das Federmittel (1) bei einer Rotation des Rotorblattes (B) in Abhängigkeit einer an der verstellbaren Profilkante (VP_{K}) wirkenden Auftriebskraftänderung (± Δ F_{A}) und einer am Federmittel (1) wirkenden Zentrifugalkraft (F_{ZF}) seine Federeigenschaft ändert.

2. Rotorblatt gemäß Anspruch 1, **dadurch gekennzeichnet, daß** als Federeigenschaft der Federweg (x) und/oder die Federsteifigkeit (C_{H}) änderbar sind.

3. Rotorblatt gemäß Anspruch 1, **dadurch gekennzeichnet, daß** mehrere Federmittel (1) radial hintereinander in Richtung Blattspitze (B_{S}) angeordnet sind.

4. Rotorblatt gemäß Anspruch 1, **dadurch gekennzeichnet, daß** das Federmittel (1) mit einem Dämpfungselement (3) angeordnet ist.

5. Rotorblatt gemäß einem der Ansprüche 1 bis 4, **dadurch gekennzeichnet, daß** das Federmittel (1) mit einem Steuerelement (4, 40, 41, 42, 43) verbunden ist.

6. Rotorblatt gemäß Anspruch 5, **dadurch gekennzeichnet, daß** das Steuerelement (4, 40, 41, 42, 43) die Federeigenschaft des Federmittels (1) beeinflußt.

7. Rotorblatt gemäß einem oder mehreren der Ansprüche 1 bis 6, **dadurch gekennzeichnet, daß** das Federmittel (1) eine Blattfeder (2) ist.

8. Rotorblatt gemäß Anspruch 7, **dadurch gekennzeichnet, daß** die Blattfeder (2) mit ihrer konkaven Wölbung in radialer Richtung zur Blattspitze (B_{S}) ausgerichtet ist.

9. Rotorblatt gemäß einem der Ansprüche 7 und 8, **dadurch gekennzeichnet, daß** ein Ende der Blattfeder (2) mit einer beweglichen Steuerstange (40) verbunden ist.

10. Rotorblatt gemäß einem der Ansprüche 7 und 8, **dadurch gekennzeichnet, daß** ein Ende der Blattfeder (2) mit einem piezoelektischen Aktuator (41) verbunden ist.

11. Rotorblatt gemäß einem der Ansprüche 7 und 8, **dadurch gekennzeichnet, daß** die Blattfeder (2) eine piezoelektrische Beschichtung (42) hat.

12. Rotorblatt gemäß Anspruch 7, **dadurch gekennzeichnet, daß** die Federkennlinie der Blattfeder (2) im Arbeitsbereich (x) je nach Auslegung linear oder nichtlinear verläuft.

13. Rotorblatt gemäß Anspruch 7, **dadurch gekennzeichnet, daß** die Federkennlinie der Blattfeder (2) im Arbeitsbereich (x) einen linearen und einen nichtlinearen Verlauf hat.

14. Rotorblatt gemäß Anspruch 7, **dadurch gekennzeichnet, daß** die Blattfeder (2) unter Verwendung einer Form-Gedächtnis-Legierung (shape memory alloy) aufgebaut ist.

15. Rotorblatt gemäß Anspruch 1, **dadurch gekennzeichnet, daß** die Blattfeder (2) an ihr wirkende Zentrifugalkräfte F_{ZF} in Kräfte F_{Z} umformt.

## Claims

1. A rotor blade of a rotary-wing aircraft, formed from a blade body and the two profile edges, wherein at least one profile edge is supportable and adjustable about an axial direction which runs lengthwise relative to the longitudinal axis of the blade, and at least one spring means is arranged between the adjustable profile edge and the blade body, **characterised in that** the spring means (1) changes its spring property in the course of a rotation of the rotor blade (B) as a function of a change in the lift force (±ΔF_{A}) acting on the adjustable profile edge (VP_{K}) and of a centrifugal force (F_{ZF}) acting on the spring means (1).

2. Rotor blade according to Claim 1, **characterised in that** by way of spring property the spring deflection (x) and/or the spring stiffness (C_{H}) are capable of being changed.

3. Rotor blade according to Claim 1, **characterised in that** several spring means (1) are arranged radially in series in the direction of the blade tip (B_{S}).

4. Rotor blade according to Claim 1, **characterised in that** the spring means (1) is provided with a damping element (3).

5. Rotor blade according to one of Claims 1 to 4, **characterised in that** the spring means (1) is connected to a control element (4, 40, 41, 42, 43).

6. Rotor blade according to Claim 5, **characterised in that** the control element (4, 40, 41, 42, 43) influences the spring property of the spring means (1).

7. Rotor blade according to one or more of Claims 1 to 6, **characterised in that** the spring means (1) is a leaf spring (2).

8. Rotor blade according to Claim 7, **characterised in that** the leaf spring (2) is oriented with its concave curvature in the radial direction towards the blade tip (B_{S}).

9. Rotor blade according to one of Claims 7 and 8, **characterised in that** one end of the leaf spring (2) is connected to a movable control rod (40).

10. Rotor blade according to one of Claims 7 and 8, **characterised in that** one end of the leaf spring (2) is connected to a piezoelectric actuator (41).

11. Rotor blade according to one of Claims 7 and 8, **characterised in that** the leaf spring (2) has a piezoelectric coating (42).

12. Rotor blade according to Claim 7, **characterised in that** the spring characteristic of the leaf spring (2) within the working range (x) is linear or non-linear, depending on the design.

13. Rotor blade according to Claim 7, **characterised in that** the spring characteristic of the leaf spring (2) within the working range (x) has a linear and a non-linear shape.

14. Rotor blade according to Claim 7, **characterised in that** the leaf- spring (2) is constructed using a shape-memory alloy.

15. Rotor blade according to Claim 1, **characterised in that** the leaf spring (2) transforms centrifugal forces F_{ZF} acting on it into forces F_{Z}.

## Revendications

1. Pale de rotor d'un giravion formée d'un corps de base de pale et de deux arêtes de profil,
au moins une arête de profil étant montée réglable autour d'une direction axiale le long de l'axe longitudinal de la pale, avec au moins un moyen de ressort installé entre l'arête de profil réglable et le corps de base de la pale,
**caractérisée en ce que**
le moyen de ressort (1) lors d'une rotation de la pale de rotor (B) change sa caractéristique de ressort en fonction d'une variation de force ascensionnelle (± Δ F_{A}) agissant sur l'arête de profil réglable (VP_{K}) et de la force centrifuge (F_{ZF}) agissant sur le moyen de ressort (1).

2. Pale de rotor selon la revendication 1,
**caractérisée en ce que**
la caractéristique de ressort variable est la course de ressort (x) et/ou la rigidité (C_{H}) du ressort.

3. Pale de rotor selon la revendication 1,
**caractérisée par**
plusieurs moyens de ressort (1) installés radialement les uns derrière les autres dans la direction de la pointe de pale (B_{S}).

4. Pale de rotor selon la revendication 1,
**caractérisée en ce que**
le moyen de ressort (1) comporte un élément d'amortissement (3).

5. Pale de rotor selon l'une quelconque des revendications 1 à 4,
**caractérisée en ce que**
le moyen de ressort (1) est relié à un élément de commande (4, 40, 41, 42, 43).

6. Pale de rotor selon la revendication 5,
**caractérisée en ce que**
l'élément de commande (4, 40, 41, 42, 43) influencé la caractéristique de ressort du moyen de ressort (1).

7. Pale de rotor selon une ou plusieurs des revendications 1 à 6,
**caractérisée en ce que**
le moyen de ressort (1) est un ressort lame (2).

8. Pale de rotor selon la revendication 7,
**caractérisée en ce que**
le ressort lame (2) est aligné avec sa courbure concave dans la direction radiale vers la pointe de pale (B_{S}).

9. Pale de rotor selon l'une quelconque des revendications 7 et 8,
**caractérisée en ce qu'**
une extrémité du ressort lame (2) est reliée à une tige de commande (40) mobile.

10. Pale de rotor selon l'une quelconque des revendications 7 et 8,
**caractérisée en ce qu'**
une extrémité du ressort lame (2) est reliée à un actionneur piézo-électrique (41).

11. Pale de rotor selon l'une quelconque des revendications 7 et 8,
**caractérisée en ce que**
le ressort lame (2) est muni d'un revêtement piézo-électrique (42).

12. Pale de rotor selon la revendication 7,
**caractérisée en ce que**
la caractéristique du ressort lame (2) dans la plage de travail (x) est linéaire ou non linéaire suivant la conception.

13. Pale de rotor selon la revendication 7,
**caractérisée en ce que**
la caractéristique de ressort du ressort lame (2) a un profil linéaire et un profil non linéaire.

14. Pale de rotor selon la revendication 7,
**caractérisée en ce que**
le ressort lame (2) comporte un alliage à mémoire de forme.

15. Pale de rotor selon la revendication 7,
**caractérisée en ce que**
le ressort lame (2) transforme la force centrifuge (F_{ZF}) à laquelle il est soumis en des forces (F_{Z}).
